# EUROPÄISCHE PATENTANMELDUNG

(11) **EP 3 779 005 A1**
(43) Veröffentlichungstag der Anmeldung: **17.02.2021**
(21) Anmeldenummer: 19192033.9
(22) Anmeldetag: 16.08.2019
(51) Int. Cl.: D04B 1/14, B01J 23/42, B01J 23/44, B01J 35/06

(54) **STRICKEN VON EDELMETALLNETZEN UNTER VERWENDUNG VON UNEDELMATERIAL AM RAND, DAMIT HERGESTELLTES EDELMETALLNETZ UND EIN VERFAHREN MIT VERWENDUNG DES EDELMETALLNETZES**

(71) Anmelder: UMICORE AG & CO. KG, 63457 Hanau-Wolfgang (DE)
(72) Erfinder: BORN, Dirk, 63505 Langenselbold (DE); KOENIGS, Dietmar, 63571 Gelnhausen (DE)

(57) **Zusammenfassung**

Die vorliegende Erfindung beschreibt ein Verfahren zur Herstellung von einem nicht rechteckigen Edelmetallnetz auf Flachbettstrickmaschinen mit den Schritten
• bereitstellen von Edelmetall- oder Edelmetalllegierungsdraht
• bereitstellen von brennbarem Garn
• stricken von einem Netz unter Verwendung von Edelmetall- oder Edelmetalllegierungsdraht für die Reaktionszone,
dadurch gekennzeichnet, dass
für den Verschnittbereich (9) brennbares Garn zur Verwendung kommt, das nach dem Strickvorgang abgeflammt oder auf andere Weise entfernt wird.

## Beschreibung

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology (Wiley-VCH Verlag, Weinheim 2013) Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Netze in Form von Geweben (DE4028916 C2), Gewirken oder Gestricken (EP0364153 B1, DE4206199 C1) aus feinen Edelmetalldrähten durchgesetzt. Die Edelmetalldrähte bestehen überwiegend aus Platin, Rhodium oder aus Legierungen dieser Metalle mit anderen Edel- oder Unedelmetallen. Typisch sind hierbei Platin-Rhodium-Legierungen mit 4 bis 12 Gew.-% Rhodium und Platin-Palladium-Rhodium-Legierungen mit 4 bis 12 Gew.-% Palladium und Rhodium.

Die Katalysatornetze werden dabei üblicherweise in einem Strömungsreaktor in einer Ebene senkrecht zur Strömungsrichtung des Gasgemisches angeordnet. Auch kegelförmige Anordnungen sind bekannt. Es werden zweckmäßigerweise meist mehrere Netze hintereinander angeordnet und zu einem Katalysatornetzstapel zusammengefasst.

Üblicherweise sind strömungsabwärts des Katalysatornetzstapels nachgeschaltete Platinauffangnetze, sogenannte Getternetze, angeordnet, die der Rückgewinnung von aus den Katalysatornetzen in Form von gasförmigen Oxiden konvektiv mit dem Reaktionsgasstrom ausgetragenem Platin und Rhodium dienen. Diese Getternetze enthalten meist Drähte aus Palladium oder Palladiumlegierungen, wie z. B. Palladium-Nickel-Legierungen mit 2 bis 15 Gew.-% Nickel, Palladium-Kupfer-Legierungen mit 2 bis 15 Gew.-% Kupfer und Palladium-Nickel-Kupfer-Legierungen mit 2 bis 15 Gew.-% Nickel und Kupfer. Sowohl zwischen dem Katalysatornetzstapel und dem ersten Getternetz als auch zwischen den Getternetzen befinden sich üblicherweise Trennnetze aus hitzebeständigem Stahl oder einer Heizleiterlegierung, die ein Zusammensintern der Netze verhindern sollen. Hitzebeständige Stähle und Heitzleiterlegierungen sind dem Fachmann bekannt. Entsprechende geeignete Materialien werden beispielsweise in DIN EN 17470 und DIN 10095 beschrieben. Ein geeingetes Material ist z.B. die Legierung mit der Werkstoffnr. 1.4767.

Die Erfindung ist für Katalysator- und Getternetze anwendbar. Im weiteren wird deshalb von Edelmetallnetzen gesprochen, wobei diese Bezeichnung Katalysator- und Getternetze umfassen soll.

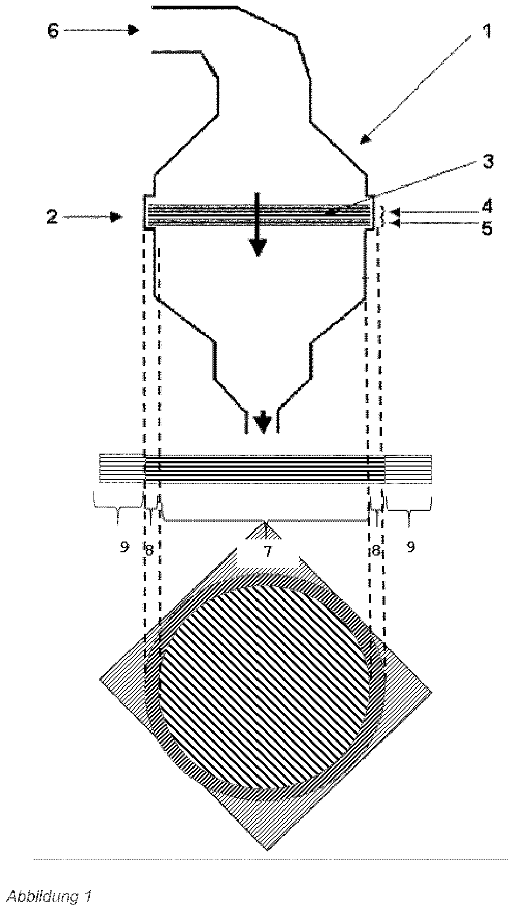

Abbildung 1 zeigt am Beispiel der katalytischen Ammoniakoxidation schematisch den Reaktor mit dem darin verbauten Netzstapel, dessen Funktion im Folgenden beschrieben wird:
In der Reaktionsebene (2) des Strömungsreaktors (1) ist in einer Ebene senkrecht zur Strömungsrichtung der Netzstapel (3), der aus mehreren hintereinander-liegenden Katalysatornetzen (4) und nachgeschalteten Trenn- und Getternetzen (5) besteht, angeordnet. Dieser Netzstapel wird durch Einklemmen in der Netzfixierungszone (8) in seiner Position gehalten.

Das Ammoniak-Luftsauerstoffgemisch (mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser die gesamte Reaktionszone (7) erfasst:

4NH3 + 5 O2 (Luft) → 4 NO + 6 H₂O

Das NO im abströmenden Reaktionsgasgemisch reagiert in der Folge mit dem überschüssigen Luftsauerstoff zu NO₂:

2 NO + O₂ → 2 NO₂

Das NO₂ wiederum reagiert in einer nachgeschalteten Absorption mit Wasser zu Salpetersäure, welche der Düngemittelproduktion zugeführt wird werden kann:

3 NO₂ + H₂O → 2 HNO₃ + NO

Gestrickte Edelmetallnetze besitzen gegenüber gewebten Netzen eine Reihe von Vorteilen, weswegen sie heute im industriellen Einsatz bevorzugt werden. Zum einen bietet die Stricktechnik die Möglichkeit einer hohen Flexibilität in Hinblick auf Strickmuster, verwendete Drahtstärken und resultierendes Flächengewicht. Zum anderen lassen sich die Edelmetallgestricke ökonomischer herstellen, da bei der Stricktechnik kürzere Rüstzeiten als bei der Webtechnik anfallen. Dies bedingt insbesondere eine erheblich reduzierte Edelmetallbindung in der Produktion. Unter Verwendung der Flachbett-Stricktechnik werden die gestrickten Netze in Einzelfertigung in Form und auf Maß gefertigt, während gewebte Netze aus gefertigten Bahnen zugeschnitten werden müssen, wobei teurer Verschnitt anfällt. Allerdings erfordert auch die Flachbett-Stricktechnik das Stricken von rechteckigen Formen, da sich andernfalls das Netz während des Strickvorgangs verzieht.

Das fertig gestrickte Katalysatornetz lässt sich damit in drei Bereiche einteilen:
- die Reaktionszone (7): dies ist der Bereich des Netzes, der nach Einbau des Netzes in den Reaktor dem Reaktionsgas (6) frei zugänglich ist und der katalytischen Umsetzung des Reaktionsgases bzw. im Falle der Getternetze dem Auffangen des Platins dient.
- die Netzfixierungszone (8): dies ist der Bereich des Netzes, der nach Einbau des Netzes in den Reaktor zwecks Netzfixierung eingeklemmt wird und somit dem Reaktionsgas (6) nicht oder nur zu geringem Teil zugänglich ist, aber ausreichende mechanische Festigkeit unter den Reaktionsbedingungen und über die Standzeit des Katalysatornetzes bieten muss.
- die Verschnittzone (9): dies ist der Bereich des Netzes, der außerhalb der Netzfixierungszone und Reaktionszone liegt und nur während des Strickverfahrens benötigt wird, um ein Verziehen des Netzes zu verhindern. Nach Beenden des Strickvorgangs ist das Netz der Verschnittzone nicht mehr erforderlich und kann entfernt werden. Das Edelmetall der Verschnittzone kann wieder eingeschmolzen und zu Draht verarbeitet werden, was allerdings die Fertigungskosten erhöht.

Der vorliegenden Erfindung lag daher die Aufgabenstellung zugrunde, nicht-rechteckige, insbesondere runde Edelmetallnetze durch Stricken zu fertigen und dennoch den prozessbedingten Bedarf an Edelmetall auf das notwendige Maß zu reduzieren.

Diese Aufgabe wird gelöst durch ein Verfahren zur Herstellung von Edelmetallnetzen auf Flachbettstrickmaschinen, bestehend aus
- bereitstellen von Edelmetall- oder Edelmetalllegierungsdraht
- bereitstellen von brennbarem Garn
- stricken von einem Netz unter Verwendung von Edelmetall- oder Edelmetalllegierungsdraht für die Reaktionszone,
wobei für den Verschnittbereich (9) brennbares Garn zur Verwendung kommt, das nach dem Strickvorgang abgeflammt oder auf andere Weise enfernt wird.

In einer bevorzugten Variante wird als Edelmetall- oder Edelmetalllegierungsdraht ein Platin- oder Platinlegierungsdraht verwendet. Für eine bevorzugte Variante dieser Ausführung wird ein Platinlegierungsdraht mit mindestens 75% Platin verwendet.

In einer weiteren bevorzugten Variante wird als Edelmetall- oder Edelmetalllegierungsdraht ein Palladium- oder Palladiumlegierungsdraht verwendet. Für eine bevorzugte Variante dieser Ausführung wird ein Palladiumlegierungsdraht mit mindestens 75% Palladium verwendet.

In einer Ausführungsvariante dieses Verfahrens zur Herstellung von Edelmetallnetzen wird für den Bereich der Verschnittzone (9) ein brennbares Garn eingesetzt, ausgewählt aus der Gruppe bestehend aus Chemiefasern, Pflanzenfasern und tierischen Fasern.

Hierbei sind unter Chemiefasern alle Fasern zu verstehen, welche durch chemische Verfahren hergestellt werden, unter Pflanzenfasern alle Fasern zu verstehen, die auf pflanzlicher Basis hergestellt werden, und unter tierischen Fasern alle Fasern zu verstehen, die auf tierischer Basis hergestellt werden (https://de.wikipedia.org/wiki/Faser, heruntergeladen am 25.4.2019, sowie G. Schnegelsberg: Handbuch der Faser - Theorie und Systematik der Faser. Deutscher Fachverlag, Frankfurt a. M. (1999)).

In einer weiteren Ausführungsvariante dieses Verfahrens zur Herstellung von Edelmetallnetzen wird außerhalb der Reaktionszone (7) als Nichtedelmetalldraht ein Draht aus hitzebeständigem Stahl oder einer Heizleiterlegierung eingesetzt.

Des weiteren umfasst diese Erfindung ein Netz, welches nach dem erfindungsgemäßen Verfahren hergestellt ist und im Bereich der Reaktionszone (7) aus Edelmetall- oder Edelmetalllegierungsdraht, und im Bereich der Netzfixierungszone (8) aus Draht aus hitzebeständigem Stahl oder einer Heizleiterlegierung besteht.

Ein weiterer Teil dieser Erfindung ist ein Verfahren zur katalytischen Oxidation von Ammoniak unter Verwendung eines Netzstapels, welcher erfindungsgemäße Katalysatornetze beinhaltet und unter Anwesenheit von Sauerstoff bei einer Temperatur im Strömungsreaktor zwischen 500°C und 1300°C und einem Druck zwischen 0,1 MPa und 1,4 MPa betrieben wird.

Im Folgenden wird die Erfindung anhand eines Beispiels beschrieben:

### Beispiel 1

Für eine Reaktionszone mit einem Durchmesser von 100 cm und einer Netzfixierungszone von 5 cm Breite muss ein quadratisches Netz mit einer Kantenlänge von 110 cm gestrickt werden. Die Gesamtfläche beträgt 12100 cm².

Für die Verschnittzone wurde Baumwolle eingesetzt, welches nach dem Strickvorgang leicht abgeflammt werden konnte. Dadurch ergibt sich eine Reduzierung des Edelmetalleinsatzes von 21%.

Des weiteren wurde der Edelmetalldraht in der Netzfixierungszone durch eine Heizleiterlegierung, Werkstoff-Nr. 1.4767, ersetzt. Die sich ergebende Reduzierung des Edelmetalleinsatzes gegenüber dem ursprünglichen quadratischen Netz beträgt 14%.

### Legende zu Abbildung 1:

1 Strömungsreaktor
2 Reaktionsebene
3 Netzstapel
4 Katalysatornetze
5 Getter- und Trennnetze
6 Reaktionsgas
7 Reaktionszone
8 Netzfixierungszone
9 Verschnittzone

## Patentansprüche

1. Verfahren zur Herstellung von einem nicht rechteckigen Edelmetallnetz auf Flachbettstrickmaschinen mit den Schritten
• bereitstellen von Edelmetall- oder Edelmetalllegierungsdraht
• bereitstellen von brennbarem Garn
• stricken von einem Netz unter Verwendung von Edelmetall- oder Edelmetalllegierungsdraht für die Reaktionszone,
**dadurch gekennzeichnet, dass**
für den Verschnittbereich (9) brennbares Garn zur Verwendung kommt, das nach dem Strickvorgang abgeflammt oder auf andere Weise entfernt wird.

2. Verfahren nach Anspruch 1, **dadurch gekennzeichnet dass** als Edelmetall- oder Edelmetalllegierungsdraht ein Platin- oder Platinlegierungsdraht verwendet wird.

3. Verfahren nach Anspruch 2, **dadurch gekennzeichnet dass** als Edelmetalllegierungsdraht ein Platinlegierungsdraht mit mindestens 75% Platin verwendet wird.

4. Verfahren nach Anspruch 1, **dadurch gekennzeichnet dass** als Edelmetall- oder Edelmetalllegierungsdraht ein Palladium- oder Palladiumlegierungsdraht verwendet wird.

5. Verfahren nach Anspruch 4, **dadurch gekennzeichnet dass** als Edelmetalllegierungsdraht ein Palladiumlegierungsdraht mit mindestens 75% Palladium verwendet wird.

6. Verfahren zur Herstellung von Edelmetallnetzen nach einem oder mehreren der Ansprüche 1 bis 5, **dadurch gekennzeichnet, dass** für den Bereich der Verschnittzone ein brennbares Garn zur Verwendung kommt, ausgewählt aus der Gruppe bestehend aus Chemiefasern, Pflanzenfasern und tierischen Fasern.

7. Verfahren zur Herstellung von Edelmetallnetzen nach einem oder mehreren der Ansprüche 1 bis 6, **dadurch gekennzeichnet, dass** für den Bereich der Netzfixierungszone (8) ein Nichtedelmetalldraht aus hitzebeständigem Stahl oder einer Heizleiterlegierung verwendet wird.

8. Netz, hergestellt entsprechend einem oder mehreren der Ansprüche 1 bis 7, **dadurch gekennzeichnet, dass** es im Bereich der Reaktionszone (7) aus Edelmetall- oder Edelmetalllegierungsdraht besteht, und im Bereich der Netzfixierungszone aus Draht aus hitzebeständigem Stahl oder einer Heizleiterlegierung besteht.

9. Verfahren zur katalytischen Oxidation von Ammoniak, die Schritte enthaltend
• bereitstellen von Netzen entsprechend Anspruch 8
• Einbau eines Netzstapels, der Netze entsprechend Anspruch 8 beinhaltet, in einen Strömungsreaktor (1)
• Zuführung eines Gases beinhaltend Ammoniak und Sauerstoff bei einer Temperatur im Strömungsreaktor zwischen 500°C und 1300°C und einem Druck zwischen 0,1 MPa und 1,4 MPa
